# EUROPEAN PATENT APPLICATION

(11) **EP 1 732 068 A1**
(43) Date of publication of application: **13.12.2006**
(21) Application number: 05727289.0
(22) Date of filing: 25.03.2005
(51) Int. Cl.: G11B 7/0065, G11B 7/09, G11B 7/135, G03H 1/26

(54) **HOLOGRAM RECORDING DEVICE, HOLOGRAM REPRODUCTION DEVICE, HOLOGRAM RECORDING METHOD, HOLOGRAM REPRODUCTION METHOD, AND HOLOGRAM RECORDING MEDIUM**

(30) Priority: 31.03.2004 JP 2004102712
(71) Applicant: SONY CORPORATION, Tokyo 141-0001 (JP)
(72) Inventor: TOISHI, Mitsuru c/o Sony Corporation, Shinagawa-ku, Tokyo (JP); OKADA, Hitoshi c/o Sony corporation, Shinagawa-ku Tokyo (JP); TANAKA, Tomiji c/o Sony Corporation, Shinagawa-ku (JP)
(74) Representative: Müller - Hoffmann & Partner
(86) International application number: PCT/JP2005/006433
(87) International publication number: WO 2005/096281

(57) **Abstract**

A hologram recording device can easily perform multiplex recording/reproduction on a hologram recording medium. The hologram recording device includes an optical system and a distance controlling mechanism. The optical system focuses on a substantially same location of a hologram recording medium a signal light modulated at a light modulating element and a reference light whose phase has been modulated at a phase modulating element. The distance controlling mechanism controls a distance between the phase modulating element and the hologram recording medium. By controlling the distance between the phase modulating element and the hologram recording medium, multiplex recording can be performed on the hologram recording medium. In an ordinary phase-correlation multiplexing method, multiplex recording is performed as a result of shifting a light-focusing location in the direction of a surface of the hologram recording medium, whereas, in the present invention, it is possible to perform the multiplex recording without shifting the light-focusing location in the direction of the surface of the hologram recording medium. It is possible to further increase recording capacity as a result of shifting the light-focusing location in the direction of the surface of the hologram recording medium. Here, compared to the ordinary phase-correlation multiplexing method, it is possible to perform shifting by a sufficient amount.

## Description

### Technical Field

The present invention relates to a hologram recording device which performs a recording operation by using a hologram, a hologram reproducing device, a hologram recording method, a hologram reproducing method, and a hologram recording medium.

### Background Art

Development of a hologram recording device which records data by using holography is being pursued.

In a hologram recording device, two lights, that is, modulated signal light (upon which data is been superimposed) and reference light that is not modulated, are generated from laser light, and are used to irradiate the same location of a hologram recording medium. As a result, the signal light and the reference light interfere with each other on the hologram recording medium, thereby forming a diffraction grating (hologram) at an irradiation point, so that data is recorded on the hologram recording medium.

By irradiating the recorded hologram recording medium with the reference light, diffraction light (reproduction light) is generated from the diffraction grating that has been formed during the recording. Since the reproduction light includes the data superimposed upon the signal light that is produced when the recording is carried out, a light-receiving element can receive the reproduction light and reproduce the recorded signal.

To record a large amount of information on the hologram recording medium, a large number of holograms may be formed on the hologram recording medium. In this case, the holograms are not necessarily formed on different locations of the hologram recording medium. That is, the holograms may be formed on the same location of the hologram recording medium as a result of varying incident angles of the reference light. This is called "multiplex recording" (angular multiplexing). By using the same reference light in the reproducing operation as in the recording operation, reproduction light corresponding to the holograms formed on same location, and, by extension, data can be obtained.

Development of a hologram recording device having its recording capacity increased by using phase-correlation multiplexing, which is one type of multiplex recording, is being pursued (refer to, for example, Japanese Unexamined Patent Application Publication No. 11-242424).

However, in phase-correlation multiplexing, multiplex recording is carried out by shifting a light-focusing location in the direction of a surface of a hologram recording medium. Therefore, to increase the recording capacity, it is necessary to precisely control this shift amount to a very small value.

In view of the above-described situation, it is an object of the present invention to provide a hologram recording device, which can easily perform multiplex recording and reproduction on a hologram recording medium, a hologram reproducing device, a hologram recording method, a hologram reproducing method, and the hologram recording medium.

### Disclosure of Invention

A. The present invention provides a hologram recording device comprising a laser light source that emits laser light, a light dividing element that divides the laser light emitted from the laser light source into signal light and reference light, a light modulating element that modulates the signal light divided at the light dividing element, a phase modulating element that modulates a phase of the reference light divided at the light dividing element, an optical system that focuses on a substantially same location of a hologram recording medium the signal light modulated at the light modulating element and the reference light whose phase has been modulated at the phase modulating element, and a distance controlling mechanism that controls a distance between the phase modulating element and the hologram recording medium.

By controlling the distance between the phase modulating element and the hologram recording medium, multiplex recording can be performed on the hologram recording medium. In an ordinary phase-correlation multiplexing method, multiplex recording is performed as a result of shifting a light-focusing location in the direction of a surface of the hologram recording medium, whereas, in the present invention, it is possible to perform the multiplex recording without shifting the light-focusing location in the direction of the surface of the hologram recording medium.

Similarly to the ordinary phase-correlation multiplexing method, it is possible to further increase recording capacity as a result of shifting the light-focusing location in the direction of the surface of the hologram recording medium. Here, compared to the ordinary phase-correlation multiplexing method, it is possible to perform shifting by a sufficient amount.
(1) The optical system may comprise an objective lens that focuses both the signal light and the reference light on the hologram recording medium.

Since focal adjustments of the signal light and the reference light can be carried out by a single objective lens, focusing control is easily carried out.

Here, the optical system may comprise a lens that transmits only one of the signal light and the reference light.

The focal depth of the signal light and the focal depth of the reference light can be easily varied.
(2) The optical system may comprise a first objective lens and a second objective lens. The first objective lens focuses the signal light on the hologram recording medium, and the second objective lens focuses the reference light on the hologram recording medium.

Since the signal light and the reference light are focused by the first objective lens and the second objective lens, respectively, the optical system is easily constructed.

B. The present invention also provides a hologram reproducing device comprising a laser light source that emits laser light, a phase modulating element that phase-modulates as reference light the laser light emitted from the laser light source, an optical system that focuses on a hologram recording medium the reference light whose phase has been modulated at the phase modulating element, and a distance controlling mechanism that controls a distance between the phase modulating element and the hologram recording medium.

By controlling the distance between the phase modulating element and the hologram recording medium, what is recorded by multiplex recording on the hologram recording medium can be reproduced. In the ordinary phase-correlation multiplexing method, what is recorded by multiplex recording is reproduced as a result of shifting a light-focusing location in the direction of the surface of the hologram recording medium, whereas, in the present invention, it is possible to reproduce what is recorded by the multiplex recording without shifting the light-focusing location in the direction of the surface of the hologram recording medium.

C. The present invention also provides a hologram recording method comprising a light dividing step of dividing laser light emitted from a laser light source into signal light and reference light, a light modulating step of modulating by a light modulating element the signal light divided in the light dividing step, a phase modulating step of modulating by a phase modulating element a phase of the reference light divided in the light dividing step, a light focusing step of focusing on a substantially same location of a hologram recording medium the signal light modulated in the light modulating step and the reference light whose phase has been modulated in the phase modulating step, and a distance controlling step of controlling a distance between the phase modulating element and the hologram recording medium.

By controlling the distance between the phase modulating element and the hologram recording medium, multiplex recording can be performed on the hologram recording medium. In an ordinary phase-correlation multiplexing method, multiplex recording is performed as a result of shifting a light-focusing location in the direction of a surface of the hologram recording medium, whereas, in the present invention, it is possible to perform the multiplex recording without shifting the light-focusing location in the direction of the surface of the hologram recording medium.

D. The present invention also provides a hologram reproducing method comprising a phase modulating step of phase-modulating laser light as reference light by a phase modulating element, the laser light being emitted from a laser light source, a light focusing step of focusing on a hologram recording medium the reference light whose phase has been modulated in the phase modulating step, and a distance controlling step of controlling a distance between the phase modulating element and the hologram recording medium.

By controlling the distance between the phase modulating element and the hologram recording medium, what is recorded by multiplex recording on the hologram recording medium can be reproduced. In the ordinary phase-correlation multiplexing method, what is recorded by multiplex recording is reproduced as a result of shifting a light-focusing location in the direction of the surface of the hologram recording medium, whereas, in the present invention, it is possible to reproduce what is recorded by the multiplex recording without shifting the light-focusing location in the direction of the surface of the hologram recording medium.

E. The present invention also provides a hologram recording medium on which data is recorded by a hologram recording method. The hologram recording method comprises a light dividing step of dividing laser light emitted from a laser light source into signal light and reference light, a light modulating step of modulating by a light modulating element the signal light divided in the light dividing step, a phase modulating step of modulating by a phase modulating element a phase of the reference light divided in the light dividing step, a light focusing step of focusing on a substantially same location of a hologram recording medium the signal light modulated in the light modulating step and the reference light whose phase has been modulated in the phase modulating step, and a distance controlling step of controlling a distance between the phase modulating element and the hologram recording medium.

As mentioned above, the present invention provides a hologram recording device, which can easily perform multiplex recording and reproduction on a hologram recording medium, a hologram reproducing device, a hologram recording method, a hologram reproducing method, and the hologram recording medium.

### Brief Description of the Drawings

Fig. 1 is a schematic view of an optical unit of a hologram recording device according to an embodiment of the present invention.
Fig. 2 is enlarged schematic view of a portion of the optical unit.
Fig. 3 is a schematic view of a hologram that is recorded/reproduced by the hologram recording device.
Fig. 4 is a schematic view showing a state of interference between signal light and reference light when the focus of the signal light is adjusted to a groove and the focus of the reference light is adjusted to a location in front of the groove.
Fig. 5 is a schematic view showing a state of interference between the signal light and the reference light when the focus of the signal light is adjusted to a location in front of the groove and the focus of the reference light is adjusted to the groove.
Fig. 6 is a schematic view showing a form of the reference light in the hologram recording device.
Fig. 7 is a schematic view showing another form of the reference light in the hologram recording device.
Fig. 8 is a schematic view showing the relationship between the groove and servo beams used to irradiate a hologram recording medium.
Fig. 9 is a schematic view showing in detail a structure of a light-receiving element.
Fig. 10 is a schematic view of an example of a driving mechanism which drives the optical unit.
Fig. 11 is a schematic view of an example of a position controlling mechanism for a phase modulating element.
Fig. 12 is a schematic view of an example of an internal structure of an objective lens unit.
Fig. 13 is a schematic view showing in detail a structure of a position detector.
Fig. 14 is a graph showing characteristics of the phase detector.
Fig. 15 is a block diagram of an example of a controlling system which controls the position of the phase modulating element.
Fig. 16 is a schematic view showing another example of a position controlling mechanism for a phase modulating element.
Fig. 17 is a schematic view of an example of an internal structure of an objective lens unit.
Fig. 18 is a schematic view of another example of a position controlling mechanism for a phase modulating element.
Fig. 19 is a block diagram of an example of a controlling system which controls the position of an objective lens and the position of a phase modulating element.
Fig. 20 is a schematic view of an example of the optical unit in which the objective lens and the phase modulating element are driven by mechanical means.
Fig. 21 is a schematic view of an optical unit of a hologram recording device in which signal light and reference light are incident upon the hologram recording medium from different light paths.

### Best Mode for Carrying Out the Invention

Embodiments of the present invention will hereunder be described with reference to the drawings.

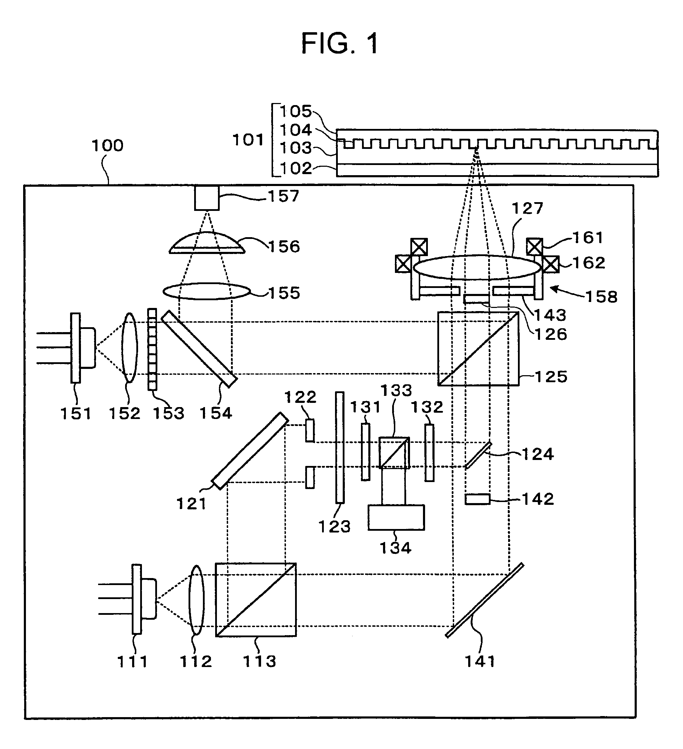

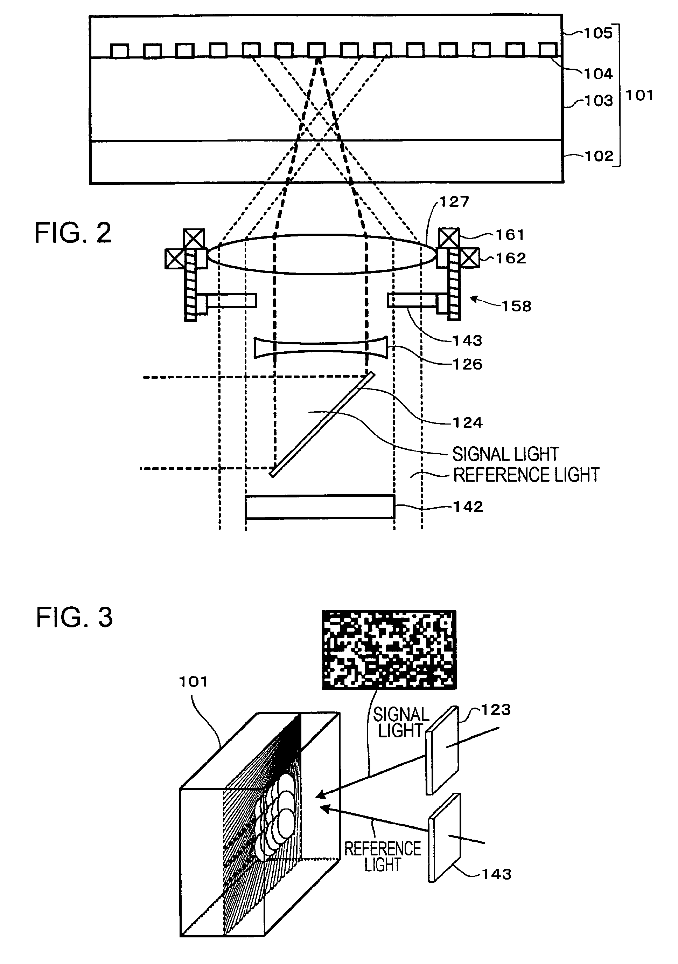

Fig. 1 is a schematic view of an optical unit 100 of a hologram recording device according to an embodiment of the present invention. Fig. 2 is enlarged schematic view of a portion of the optical unit 100. In Fig. 2, for the sake of simplicity, a portion of an optical element is now shown.

As shown in Figs. 1 and 2, the hologram recording device is used to record information onto and reproduce the information from a hologram recording medium 101, and comprises the optical unit 100.

The optical unit 100 comprises a recording/reproduction light source 111, a collimator lens 112, a polarization beam splitter 113, a mirror 121, a pinhole 122, a spatial light modulator 123, a mirror 124, a dichroic mirror 125, a concave lens 126, an objective lens 127, Faraday elements 131 and 132, a polarization beam splitter 133, an image pickup element 134, a mirror 141, a light-shielding plate 142, a phase modulating element 143, a servo light source 151, a collimator lens 152, a grating 153, a beam splitter 154, a condensing lens 155, a cylindrical lens 156, a light-receiving element 157, and a servo driving unit 158.

The hologram recording medium 101 has a protective layer 102, a recording layer 103, a groove 104, and a reflective layer 105, and is used to record thereon an interference fringe produced by signal light and reference light.

The protective layer 102 is a layer for protecting the recording layer 103 from the surrounding.

The recording layer 103 is used to record thereon the interference fringe as a change in refractive index (or transmissivity). Either an organic material or an inorganic material may be used as long as the material is one whose refractive index (or transmissivity) changes in accordance with light intensity.

A usable inorganic material is, for example, a photorefractive material, such as lithium niobate (LiNbO₃), whose refractive index changes in accordance with exposure amount by electro-optical effect.

A usable organic material is, for example, photopolymerization photopolymer. In an initial state of the photopolymerization photopolymer, monomers are uniformly dispersed in a matrix polymer. When this is irradiated with light, the monomers are polymerized at an exposure portion. As the polymerization progresses, monomers move from the vicinity, so that the density of the monomers change depending upon location.

Accordingly, when the refractive index (or the transmissivity) of the recording layer 103 changes in accordance with the exposure amount, the interference fringe that is produced by the interference between the reference light and the signal light can be recorded on the hologram recording medium 101 as a change in the refractive index (or the transmissivity).

The hologram recording medium 101 is moved or rotated by driving means (not show), so that an image at the spatial light modulator 123 can be recorded as a plurality of holograms.

Since the hologram recording medium 101 moves, recording/reproduction is performed on the hologram recording medium 101 along tracks formed in its direction of movement.

The groove 104 is provided for performing servo control of, for example, a tracking operation or a focusing operation with respect to the hologram recording medium 101. That is, the groove 104 is formed along a track of the hologram recording medium 101. By controlling a signal-light-focusing position and depth in accordance with the groove 104, the tracking servo operation and the focusing servo operation are carried out.

The recording/reproduction light source 111 is a laser light source. For example, a laser diode (LD) having a wavelength of 405 [nm] or an Nd-YAG laser having a wavelength of 532 [nm] may be used.

The collimator lens 112 is an optical element that converts laser light with which it is irradiated by the recording/reproduction light source 111 into parallel light.

The polarization beam splitter 113 is an optical element that divides the parallel light from the collimator lens 112 and incident thereupon into signal light and reference light. From the polarization beam splitter 113, an s-wave signal light travels towards the mirror 121 and a p-wave reference light travels towards the mirror 141.

The mirrors 121, 124, and 141 reflect light incident thereupon and change the directions of the light.

The pin hole 122 is an optical element that reduces a beam size of the signal light.

The spatial light modulator 123 is an optical element which spatially (here, two-dimensionally) modulates the signal light and superimposes data thereupon. A transmissive liquid crystal element, which is a transmissive element, may be used for the spatial light modulator 123. It is also possible to use a GLV (Grating Light Value) element, or a reflective liquid crystal or a DMD (Digital Micro Mirror Device), which is a reflective element, for the spatial light modulator.

The dichroic mirror 125 is an optical element for making the same a light path of the light used for recording/reproduction (that is, the laser light from the recording/reproduction light source 111) and light used for the servo operation (that is, laser light from the servo light source 151). Since the wavelength of the laser light from the recording/reproduction light source 111 and the wavelength of the laser light from the servo light source 151 are different, the dichroic mirror 125 passes the recording/reproduction light emitted from the recording/reproduction light source 111 and reflects the servo light emitted from the servo light source 151. The dichroic mirror 125 has its surface subjected to thin-film processing so as to pass all of the recording/reproduction light and totally reflect the servo light.

The concave lens 126 is a lens for making different the focusing property of the signal light from that of the reference light. The concave lens 126 passes only the signal light, so that the focusing depth of the signal light and that of the reference light at the hologram recording medium 101 differ.

The objective lens 127 is an optical element for focusing both the signal light and the reference light on the hologram recording medium 101.

The Faraday elements 131 and 132 are each an optical element for rotating a polarization plane. An s-polarized light incident upon the Faraday element 131 has its polarization plane rotated by 45 degrees, and is converted back to the original s-polarized light at the Faraday element 132.

The polarization beam splitter 133 is an optical element for passing polarized light incident thereupon from the Faraday element 131 and for reflecting return light (reproduction light) reflected by the hologram recording medium 101 and returning from the Faraday element 132. This is achieved by combination of the Faraday elements 131 and 132 and the polarization beam splitter 133.

The image pickup element 134 is an element for inputting an image contained in the reproduction light. For example, a CCD (charge-coupled device) or a CMOS (complementary metal oxide semiconductor) may be used for the image pickup element 134.

The light-shielding plate 142 is an optical element for blocking a portion of the reference light so that it does not overlap the signal light.

The phase modulating element 143 is an optical element for providing the reference light with a random phase or a certain phase pattern, and may be called a phase mask. A frosted glass, a diffuser, or a spatial phase modulator may be used for the phase modulating element 143. A hologram element in which a phase pattern is recorded may also be used. Reproduction by the hologram element causes light having a phase pattern to be generated.

The servo light source 151 is a light source for performing servo control, such as a tracking servo operation or a focusing servo operation, and emits laser light whose wavelength is different from that of the laser light emitted from the recording/reproduction light source 111. The servo light source 151 is, for example, a laser diode, which has an oscillation wavelength, such as 650 nm, having a small sensitivity with respect to the hologram recording medium 101.

The collimator lens 152 is an optical element that converts the laser light with which it is irradiated by the servo light source 151 into parallel light.

The grating 153 is an optical element for dividing the laser light from the collimator lens 152 into three beams, and comprises two elements. The laser light is divided for performing servo control.

The beam splitter 154 is an optical element for passing the laser light from the grating 153 and for reflecting return light reflected from the hologram recording medium 101 and returning to the beam splitter 154.

The condensing lens 155 is an optical element for condensing the return light from the beam splitter 154 on the light-receiving element 157.

A cylindrical lens 156 is an optical element for converting from a circular form to an elliptical form the beam form of the laser light traveling from the condensing lens 155.

The light-receiving element 157 is an element for receiving the return light and outputting a tracking error signal for performing tracking servo control and a focus error signal for performing focusing servo control.

The servo driving unit 158 is a driving mechanism for driving the objective lens 127 on the basis of the focus error signal and the tracking error signal that have been generated from the output of the light-receiving element 157 to perform the tracking control and the focusing control. The servo driving unit 158 includes driving coils 161 and 162.

### (Operation of Hologram Recording Device)

An outline of the operation of the hologram recording device will hereunder be given.

### A. Recording

An outline of the operation of the hologram recording device when it performs a recording operation will be given.

Laser light emitted from the recording/reproduction light source 111 is converted into parallel light by the collimator lens 112, and the parallel light is divided into an s-wave signal light and a p-wave reference light by the polarization beam splitter 113.

The signal light is reflected by the mirror 121, is formed into one having a predetermined beam size by the pin hole 122, and has its intensity spatially modulated by the spatial light modulator 123. The laser light modulated by the spatial light modulator 123 passes through the Faraday element 131, the polarization beam splitter 133, and the Faraday element 132, and is reflected by the mirror 124 so as to pass through the concave lens 126 which performs adjustment of a focus at the hologram recording medium 101.

The reference light that has passed through the polarization beam splitter 113 is reflected by the mirror 141, and only a central portion of the beam is blocked by the light-shielding plate 142 to form the reference light into one having a predetermined beam form. Therefore, it is not reflected by the mirror 124, so that its light path is the same as that of the signal light.

The objective lens 127 focuses the recording light and the reference light on substantially the same location of the hologram recording medium 101 to form an interference fringe on the hologram recording medium 101. As a result, information spatially modulated by the spatial light modulator 123 is recorded as a hologram on the hologram recording medium 101.

Here, by moving (shifting) the entire unit 101 or the hologram recording medium 101 in a plane and causing the signal light and the reference light to impinge upon substantially the same location, the spatially modulated data is recorded as a hologram on the hologram recording medium 101. Here, the required movement amount (shift amount) depends upon the pitch of the phase pattern of the phase modulating element 143.

By moving (shifting) the phase modulating element 143 or the entire unit 100 in a direction perpendicular to the surface of the hologram recording medium 101 (that is, a depth direction) and causing the signal light and the reference light to be incident upon the hologram recording medium 101, the spatially modulated data is recorded.

By operating the servo driving unit 158 on the basis of a servo signal that has been generated from an output signal from the light-receiving element 157, the problem of a shift of the tracking operation and the focusing operation is overcome. Details thereof will be given later.

### B. Reproduction

An outline of the operation of the hologram recording device when it performs a reproduction operation will be given.

When a reproduction operation is to be performed, signal light is blocked, and only reference light is incident upon the hologram recording medium 101.

The reference light emitted from the recording/reproduction light source 111 and transmitted through the polarization beam splitter 113 is reflected by the mirror 141, and only the central portion of the beam is blocked by the light-shielding plate 142. Thereafter, the reference light passes through the dichroic mirror 125 and is converted into one having a phase pattern that is the same as that in the recording operation. Then, the converted reference light is incident upon the hologram recording medium 101.

When the reference light having the same phase pattern as that in the recording operation is incident upon the hologram recording medium 101, diffraction light (reproduction light) is generated from a hologram recorded on the hologram recording medium 101.

The generated reproduction light travels through the signal-light light path in the reverse direction. Accordingly, it passes through the objective lens 127, the concave lens 126, and the dichroic mirror 125, and is reflected by the mirror 124.

The reproduction light reflected by the mirror 124 is such that a polarization direction is rotated by the Faraday element 132. As a result, the reproduction light from the Faraday element 132 is reflected by the polarization beam splitter 133, and is converted by the image pickup element 134 into an electrical signal corresponding to spatially two-dimensional data at the spatial light modulator 123. An output from the image pickup element 134 is binarized by a signal processor (not shown) and converted into time-series binarized data.

Here, by moving (shifting) the hologram recording medium 101 or the entire unit 100 in a plane and causing the reference light to be incident upon a location where the reproduction is to be performed on the hologram recording medium 101, predetermined data is reproduced.

It is possible to take out data that has been multiplexed in a depth direction as a result of moving (shifting) the phase modulating element 143 or the entire unit 100 in a direction perpendicular to the surface of the hologram recording medium 101 (that is, in the depth direction).

### [Hologram Recording by Using Phase Modulating Element 143]

Fig. 3 is a schematic view of a hologram that is recorded/reproduced by the hologram recording device.

As shown in Fig. 3, when signal light spatially modulated by the spatial light modulator 123 interferes with reference light provided with a random phase pattern or a phase pattern having a certain regularity by the phase modulating element 143, a hologram is recorded on the hologram recording medium 101. By irradiating the hologram recording medium 101 with the reference light having the same phase pattern as that in the recording operation, the recorded hologram is reproduced (phase-correlation multiplexing method).

Here, multiplex recording can be performed by shifting either or both of the hologram recording medium 101 and the unit 100 in a direction parallel with the surface of the hologram recording medium 101. At this time, since the reference light has the phase pattern, this shift amount may be very small.

By changing the relative distance between the hologram recording medium 101 and the phase modulating element 143, it is possible to change a phase pattern in a thickness direction (direction perpendicular to the surface). Therefore, multiplex recording/reproduction can be performed in the thickness direction of the hologram recording medium 101.

The directions of multiplex recording can be appropriately selected. Multiplex recording in the thickness direction can be performed after performing multiplex recording in the direction of the surface of the hologram recording medium 101. Alternatively, the reverse is possible, that is, the multiplex recording in the direction of the surface of the hologram recording medium 101 can be performed after the multiplex recording in the thickness direction of the hologram recording medium 101.

### [Focal Position]

In Figs. 1 and 2, by passing only signal light through the concave lens 126, the focus of the signal light is adjusted to the groove 104, and the focus of the reference light is adjusted to a location in front of the groove 104.

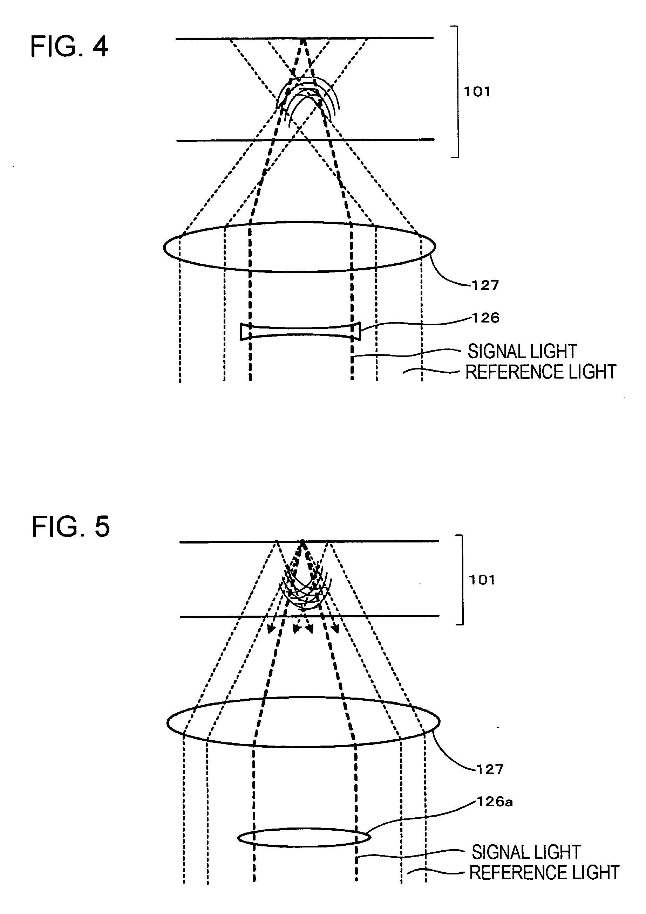

Fig. 4 is a schematic view showing a state of interference when the focuses are adjusted as mentioned above.

A hologram is recorded as a result of interference between the signal light and the reference light. The hologram that is generated at this time is a transmissive grating. During reproduction, diffraction light is reproduced by using the reference light, the reproduced diffraction light is reflected by the reflective layer 105, and the reflected diffraction light is taken out as reproduction light.

Fig. 5 is a schematic view showing a state of interference between the signal light and the reference light when the focus of the signal light is adjusted to a location in front of the groove 104 and the focus of the reference light is adjusted to the groove 104 by using a convex lens 126a instead of the concave lens 126.

Here, a hologram is recorded as a result of interference between a component of the reference light reflected by the reflective layer 105 and the signal light. Similarly to when reproduction is performed, diffraction light is generated from the reflected component of the reference light.

It is also possible to, for example, adjust the focuses of both the signal light and reference light to a location in front of the groove 104 or adjust the focuses of both the signal light and reference light to a location behind the groove 104.

Although, in Figs. 1 and 2, the concave lens 126 is placed in the signal light for focusing the reference light in front of the signal light, a convex lens may be placed in the reference light instead. Although, in Fig. 5, the convex lens 126a is placed in the signal light, a concave lens may be placed in the reference light instead.

### [Form of Reference Light]

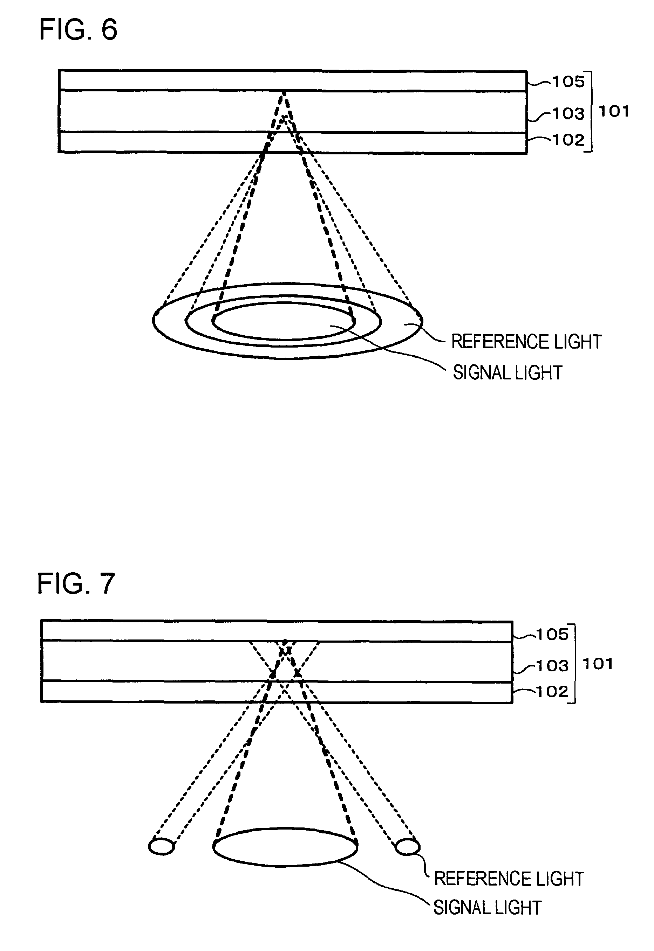

Fig. 6 is a schematic view showing a form of the reference light shown in Figs. 1 and 2. The reference light is incident upon the hologram recording medium 101 so as to surround the signal light.

Alternatively, it is possible to cause two reference lights to be incident upon the hologram recording medium 101 from both sides of the signal light as shown in Fig. 7. It is also possible to cause the reference light to be incident upon the hologram recording medium 101 from only one side instead of from both sides of the signal light. Three or four reference lights may also be used.

### [Servo Mechanism]

A servo operation of the hologram recording device will hereunder be described.

A laser beam (servo beam) emitted from the servo light source 151 is converted into parallel light by the collimator lens 152, the parallel light is divided into a plurality of light beams by the grating 153, and the divided light beams are incident upon the beam splitter 154. The servo light beams pass through the beam splitter 154, and are reflected by the dichroic mirror 125. The servo light beams reflected by the dichroic mirror 125 are narrowed by the objective lens 127 and are used to irradiate the hologram recording medium 101.

The servo beams reflected by the reflective layer 105 of the hologram recording medium 101 pass through the objective lens 127, are reflected by the dichroic mirror 125, and are incident upon the beam splitter 154. The servo beams are reflected by the beam splitter 154, and narrowed by the condensing lens 155. Then, astigmatism is caused to occur at the cylindrical lens 156, and the servo beams are incident upon the light-receiving element (photodetector) 157.

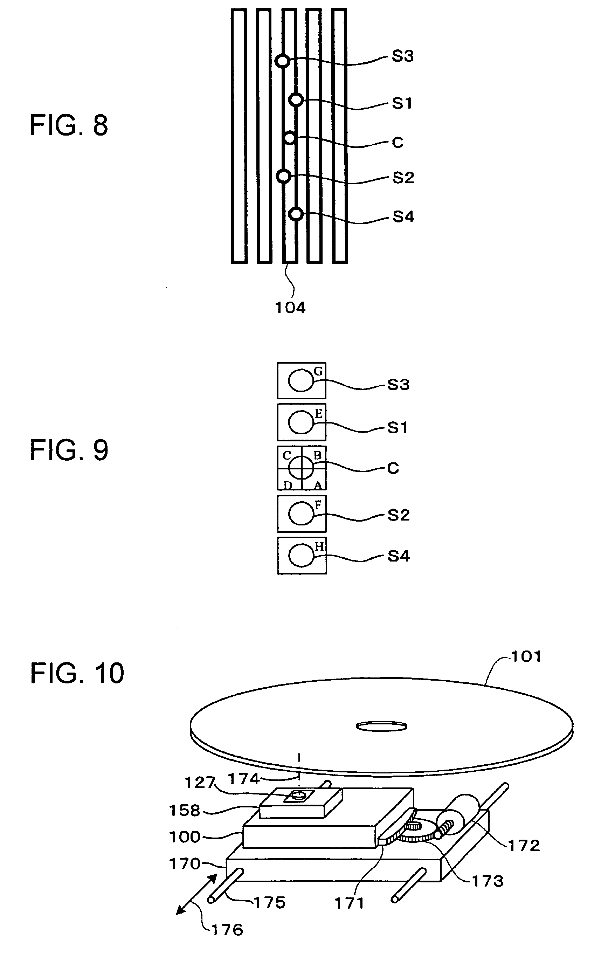

Fig. 8 is a schematic view showing the relationship between the groove 104 and servo beams used to irradiate the hologram recording medium 101.

As shown in the figure, the servo beam is divided into servo beams by the grating 153, so that the groove 104 is irradiated with a center beam C and beams S1 to S4 that exist on both sides of the center beam C. The grating 153 comprises two grating portions, of which one produces the beams S1 and S2 and the other produces the beams S3 and S4.

The servo beams S1 to S4 are disposed in a tilted manner so as to impinge upon, for example, only half of the groove 104. The beams S1 and S2 and the beams S3 and S4 are tilted in opposite directions.

The servo beams do not need to be disposed at the center of a recording/reproduction beam, so that they may be disposed anywhere.

Fig. 9 is a schematic view showing in detail a structure of the light-receiving element 157. As shown in the figure, the light-receiving element 157 comprises eight element portions A to H. The beam S3 is incident upon the element portion G, the beam S1 is incident upon the element portion E, the beam C is incident upon the element portions A to D, the beam S2 is incident upon the element portion F, and the beam S4 is incident upon the element portion H.

A focus servo error signal and a tracking servo error signal are generated by the following calculations on the basis of outputs PA to PH of the eight element portions A to H.
Focus error signal (Focus error): (PA + PC) - (PB + PD)
Tracking error signal (Tracking error): PE - PF

When the coils 161 and 162 of the servo driving unit 158 drives the objective lens 127 on the basis of these error signals, a focus servo operation and a tracking servo operation are carried out.

Fig. 10 is a schematic view of a driving mechanism which drives the optical unit 100 shown in Figs. 1 and 2.

As shown in the figure, the optical unit 100 is disposed on a transporting stage 170, and a gear 171 is mounted to one end of the optical unit 100. A motor 172 and a gear 173 that reduces the rotation of the motor 172 are mounted on the transporting stage 170 at the other side. The motor 172 and the gear 173 and the gear 173 and the gear 171 engage each other so as to rotate the optical unit 100 with an optical axis 174 passing through the objective lens 127 as a center.

A shaft 175 is mounted to the transporting stage 170 so as to allow movement thereof in an inner peripheral direction and an outer peripheral direction of the hologram recording medium 101 (that is, in the directions of a double-headed arrow 176) by a motor (not shown). The hologram recording medium 101 is disposed above the optical unit 100, and is rotated by a spindle motor (not shown).

As a result, a hologram can be recorded or reproduced at an appropriate location on the hologram recording medium 101.

### [Control of Position of Phase Modulating Element (Diffuser) 143]

A position controlling mechanism for controlling the position of the phase modulating element 143 with respect to the hologram recording medium 101 will be described.

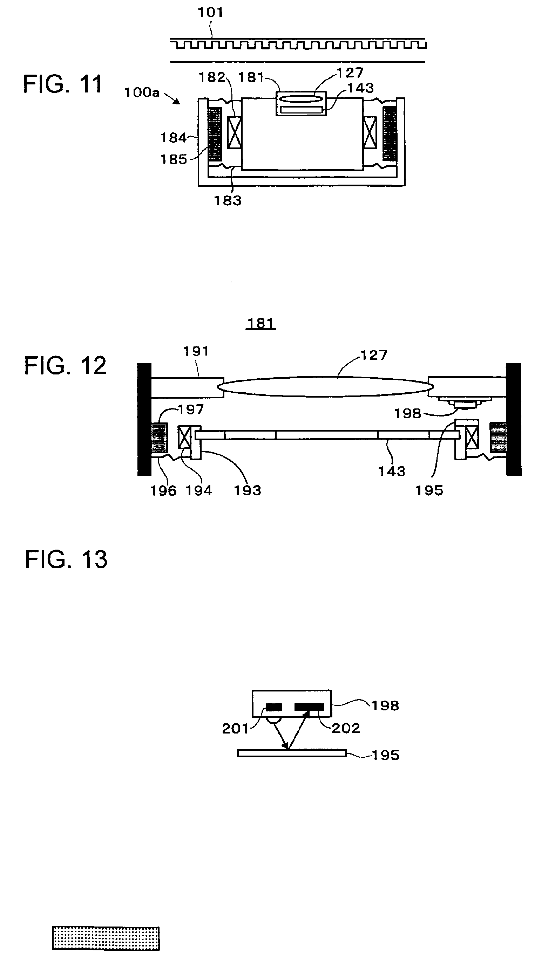

Fig. 11 is a schematic view of a position controlling mechanism for a phase modulating element 143.

An objective lens unit 181 including an objective lens 127 and the phase modulating element 143 is disposed at an optical unit 100a. Coils 182 are mounted at both sides of the optical unit 100a, and are mounted to a carriage 184 through a suspension 183.

Magnets 185 mounted to the carriage 184 are disposed at sides opposing the coils 182.

When electrical current is made to flow through the coils 182, electromagnetic force is generated by the magnetic field of the magnets 185, causing the optical unit 100a to move vertically.

Since the hologram recording medium 101 is rotating, its distance from the objective lens 127 changes due to, for example, deflection of its surface. Therefore, electrical current is made to flow through the coils 182 on the basis of a focus error signal to move the entire optical unit 100a vertically, thereby performing a focus servo operation.

Fig. 12 is a schematic view of an internal structure of the objective lens unit 181.

The objective lens 127 is mounted to a holder 191 and is secured to a housing of the optical unit 100a. The phase modulating element 143 is mounted to a holder 193 below the objective lens 127, coils 194 are mounted to both sides of the phase modulating element 143, and a reflective plate 195 is mounted to one of the coils 194.

The holder 193 is mounted to a housing of the objective lens unit 181 by a suspension 196, so that the phase modulating element 143 is movable vertically. At sides opposing the coils 194, magnets 197 are mounted to the housing of the optical unit 100a. A position detector 198 is mounted above the reflective plate 195, and can detect the vertical position of the phase modulating element 143 with respect to the objective lens 127.

Fig. 13 is a schematic view showing in detail a structure of the position detector 198.

The position detector 198 comprises an LED 201 and a position detecting element 202 that are disposed in the same package. Light emitted from the LED 201 is reflected by the reflective plate 195 and is incident upon the position detecting element 202.

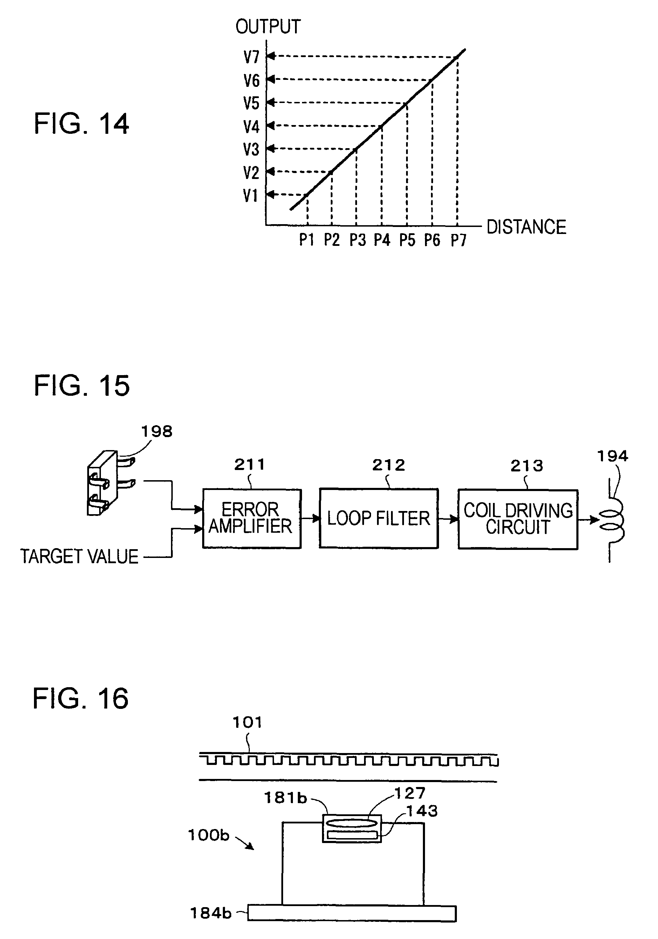

Fig. 14 is a graph showing characteristics of the position detector 198.

As shown in the figure, output voltage that is output from the position detector 198 varies linearly with respect to the distance between the position detector 198 and the reflective plate 195.

Fig. 15 is a block diagram of a controlling system which controls the position of the phase modulating element 143.

For example, when the distance between the phase modulating element 143 and the objective lens 127 is at P1 and this distance is changed to P2 from P1, an output voltage V1 from the position detector 198 is input to an input terminal of an error amplifier 211.

A target-value voltage V2 is input to the other input terminal of the error amplifier 211, and the error between V2 and V1 is amplified. The output thereof causes electrical current to flow through the coils 194 by a coil driving circuit 213 whose characteristics as a servo system are optimized by a loop filter 212 disposed so as to follow the error amplifier 211.

The electrical current in the coils 194 and the magnetic field of the magnet 197 cause an electromagnetic force to act at the coils 194, so that, for example, when the polarity of the output voltage from the error amplifier 211 is positive, positive electrical current flows through the coils 194, as a result of which the phase modulating element 143 moves further away from the objective lens 127. Since this causes the output voltage from the position detector 198 to approach the target voltage V2, the output voltage of the error amplifier 211 is reduced, causing the distance to stop at P2.

When the distance between the phase modulating element 143 and the objective lens 127 is at P4, and changes to P3 from P4, the polarity of the output voltage from the error amplifier 211 becomes negative. Therefore, negative electrical current flows through the coils 194, causing the phase modulating element 143 to move closer to the objective lens 127. This causes the output from the position detector 198 to approach V3, so that the output voltage from the error amplifier 211 is reduced, causing the distance to stop at P3.

Accordingly, since the controlling circuit provides negative feedback, the phase modulating element 143 is at all times controlled at a position where the voltage V2 input as a target value is equal to the output voltage of the position detector 198. As described above, when target values V3, V4, etc., are input, distances between the phase modulating element 143 and the objective lens 127 can be set at P3, P4, etc., respectively, so that the distance therebetween can at all times be maintained at a certain value.

Fig. 16 is a schematic view showing another example of a position controlling mechanism for a phase modulating element 143. An optical unit 100b including an objective lens unit 181b is secured to a carriage 184b.

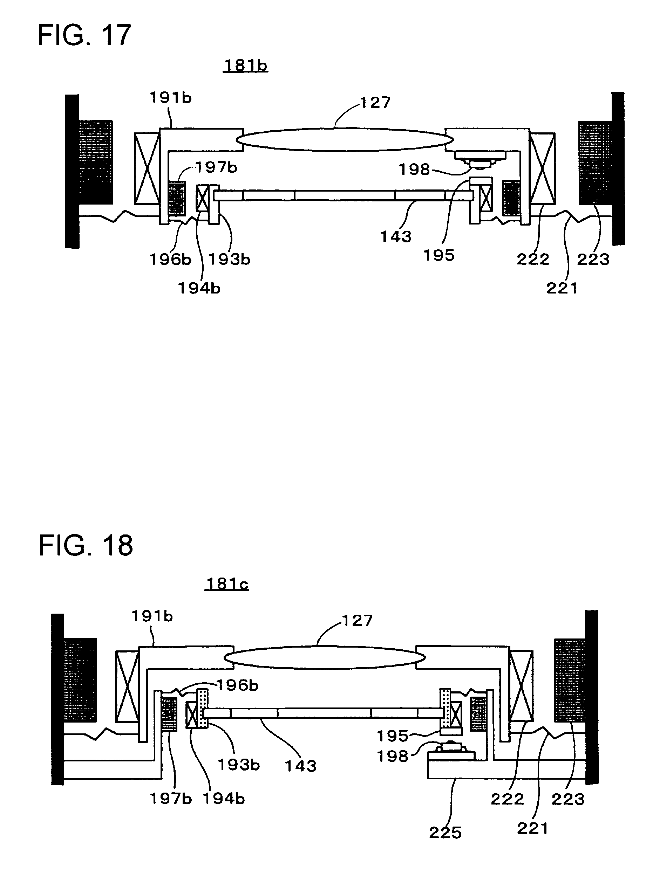

Fig. 17 is a schematic view of the objective lens unit 181b disposed in the optical unit 100b.

As shown in Fig. 17, the phase modulating element 143 is mounted to a holder 193b, coils 194b are mounted to both sides of the phase modulating element 143, and a reflective plate 195 is mounted to one of the coils 194b. The holder 193b is mounted to a holder 191b by a suspension 196b, so that the phase modulating element 143 can move vertically.

Magnets 197b mounted to the holder 191b are disposed at sides opposing the coils 194b. A position detector 198 is mounted above the reflective plate 195, and can detect the vertical position of the phase modulating element 143 with respect to the objective lens 127. As already mentioned, a controlling system controls the distance between the objective lens 127 and the phase modulating element 143 at a certain value.

The objective lens 127 is mounted to the holder 191b, and is secured to a housing of the optical unit 100b by a suspension 221. Coils 222 are mounted to the holder 191b. At sides opposing the coils 222, magnets 223 are mounted to a housing of the objective lens unit 181b.

For example, deflection of a surface of a rotating disc causes the distance between the hologram recording medium 101 and the objective lens 127 to change. Therefore, electrical current is made to flow through the coils 222 on the basis of a focus error signal to vertically or horizontally move together the phase modulating element 143 and the objective lens 127 mounted to the holder 191b to which the coils 222 are mounted, thereby performing a focus-servo/tracking-servo operation. That is, in this example, the optical unit 100b is fixed, and actuators, disposed at the optical unit 100b, for a focus servo operation and for the phase modulating element 143 operate.

Fig. 18 is a schematic view of an objective lens unit 181c related to another example of a position controlling mechanism of a phase modulating element 143.

As shown in Fig. 18, the phase modulating element 143 is mounted to a holder 193b. The holder 193b is mounted to a holder 225 by a suspension 196b. At sides opposing coils 194b, magnets 197b are mounted to the holder 225. The holder 225 is secured to a housing of the objective lens unit 181c.

A position detector 198 is mounted below a reflective plate 195, and can detect the vertical position of the phase modulating element 143 with respect to the objective lens unit 181c.

In this case, since the position detector 198 is mounted to the holder 225, the distance between the objective lens unit 181c and the phase modulating element 143 is controlled.

The objective lens 127 is mounted to a holder 191b, and is secured to the housing of the objective lens unit 181c by a suspension 221.

Coils 222 are mounted to the holder 191b. At sides opposing the coils 222, magnets 223 are mounted to the housing of the objective lens unit 181c.

For example, deflection of a surface of a rotating disc causes the distance between the hologram recording medium 101 and the objective lens 127 to change. Therefore, electrical current is made to flow through the coils 222 on the basis of a focus error signal to vertically move the objective lens 127, thereby performing a focus-servo operation.

That is, in this example, the objective lens unit 181c is fixed, and actuators (coils 222) for a focus servo operation and the phase modulating element 143 are operated independently.

This example is advantageous when a tolerance of the position of the phase modulating element 143 with respect to the thickness direction of the hologram recording medium 101 is wide. In this system, when a servo operation is carried out as a result of moving the entire unit 100, one may think that the operation is slow. However, the linear speed in hologram recording is a few tenths to a few hundredths of that in an ordinary CD or DVD. Therefore, it is very small as a servo band, so that it is not a very serious problem.

As described above, in the objective lens unit 181c, a focus-servo circuit controls the objective lens 127 so that its distance from the hologram recording medium 101 is a certain value and the phase modulating element 143 so that it is disposed at a target location.

Although both of these are separately controlled, for example, when the objective lens 127 has been moved by a focus-servo operation, it is more desirable to also move the phase modulating element by the same amount. That is, it is desirable to operate both of them in synchronism.

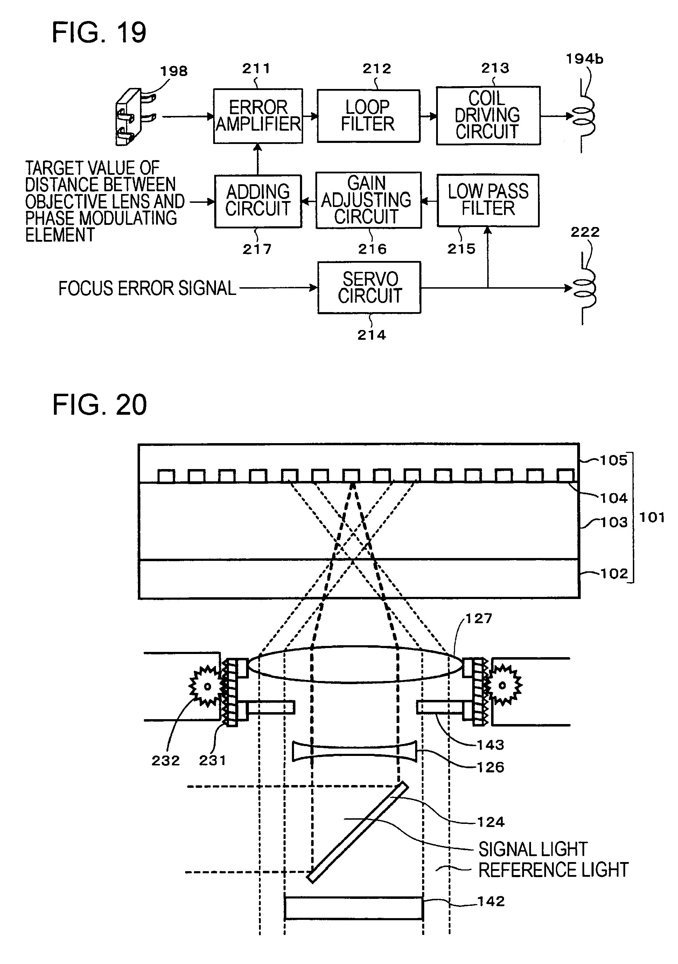

Fig. 19 is a block diagram of a controlling system which controls the position of an objective lens 127 and the position of a phase modulating element 143.

In Fig. 19, a servo circuit 214 causes electrical current to flow through a coil 222 on the basis of a focus error signal for operation.

Since a dc component of a voltage or an electrical current flowing through the coil 222 is proportional to the distance of movement of the objective lens 127, the dc component is taken out by a low-band filter 215 and is subjected to gain adjustment at a gain adjusting circuit 216 so as to provide an amount of movement that is equivalent to the amount of movement of the objective lens 127, and the dc component that has been subjected to the gain adjustment is input to an end of an adding circuit 217. This input amount is equivalent to the amount of movement of the objective lens 127. A target value of the distance between the objective lens 127 and the phase modulating element 143 is input to the other end of the adding circuit 217. Both of these values are added and the added result is input to an error amplifier 211.

As already described above, the error amplifier 211, a loop filter 212, and a coil driving circuit 213 control the phase modulating element 143 so as to be disposed at a position that is set on the basis of the target value. That is, while the phase modulating element 143 is maintained from the objective lens 127 at a distance set on the basis of the target value, the phase modulating element 143 moves in synchronism with the objective lens 127.

### [Driving Means of Objective Lens and Phase Modulating Element 143]

In the foregoing description, the objective lens 127 and the phase modulating element 143 are driven by electromagnetic force that is produced at the coils 161, 162, etc. Alternatively, other means, such as mechanical means, may be used to drive the objective lens 127 and the phase modulating element 143.

Fig. 20 shows a case in which the objective lens 127 and the phase modulating element 143 are driven by mechanical means, and corresponds to Fig. 2.

Here, the objective lens 127 and the phase modulating element 143 are moved vertically by a combination of a rack 231 and a pinion 232. That is, by driving the pinion 232 by a motor (not shown), the objective lens 127 and the phase modulating element 143 can be driven.

### [Impingement of Signal Light and Reference Light from Different Light Paths]

Although, in the foregoing description, the signal light and the reference light are described as being incident upon the hologram recording medium 101 from the same light path, the signal light and the reference light may be incident upon the hologram recording medium 101 from different light paths.

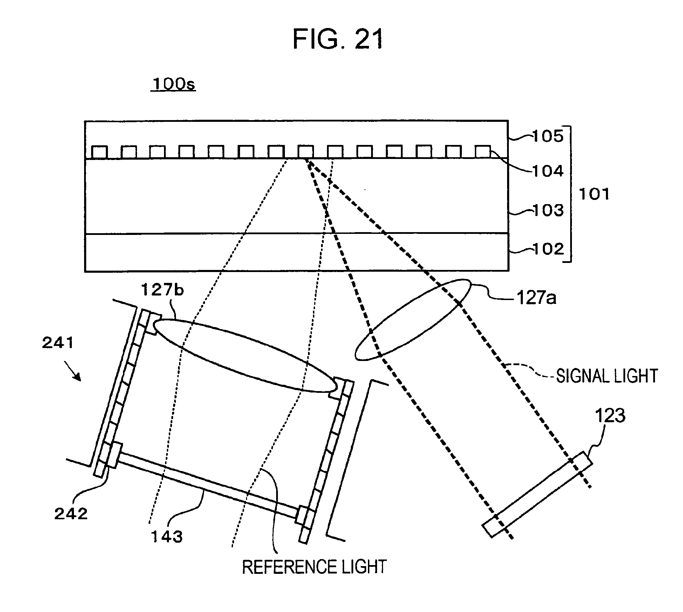

Fig. 21 is a schematic view of an optical unit 100s of a hologram recording device in which signal light and reference light are incident upon the hologram recording medium 101 from different light paths.

The signal light is subjected to spatial intensity modulation by a spatial light modulator 123, and is caused to be incident upon the hologram recording medium 101 by an objective lens 127a. The reference light is subjected to phase modulation by a phase modulating element 143 and is caused to be incident upon the hologram recording medium 101 by an objective lens 127b.

A servo mechanical unit 241 performs a servo operation on the reference light. Multiplex recording in the depth direction is carried out as a result of shifting the phase modulating element 143 by a mechanical mechanism 242 used for a depth-direction multiplexing operation.

## Claims

1. A hologram recording device comprising:
a laser light source that emits laser light;
a light dividing element that divides the laser light emitted from the laser light source into signal light and reference light;
a light modulating element that modulates the signal light divided at the light dividing element;
a phase modulating element that modulates a phase of the reference light divided at the light dividing element;
an optical system that focuses on a substantially same location of a hologram recording medium the signal light modulated at the light modulating element and the reference light whose phase has been modulated at the phase modulating element; and
a distance controlling mechanism that controls a distance between the phase modulating element and the hologram recording medium.

2. The hologram recording device according to Claim 1, wherein the optical system comprises an objective lens that focuses both the signal light and the reference light on the hologram recording medium.

3. The hologram recording device according to Claim 1, wherein the optical system comprises a lens that transmits only one of the signal light and the reference light.

4. The hologram recording device according to Claim 1, wherein the optical system comprises a first objective lens and a second objective lens, the first objective lens focusing the signal light on the hologram recording medium, the second objective lens focusing the reference light on the hologram recording medium.

5. A hologram reproducing device comprising:
a laser light source that emits laser light;
a phase modulating element that phase-modulates as reference light the laser light emitted from the laser light source;
an optical system that focuses on a hologram recording medium the reference light whose phase has been modulated at the phase modulating element; and
a distance controlling mechanism that controls a distance between the phase modulating element and the hologram recording medium.

6. A hologram recording method comprising:
a light dividing step of dividing laser light emitted from a laser light source into signal light and reference light;
a light modulating step of modulating by a light modulating element the signal light divided in the light dividing step;
a phase modulating step of modulating by a phase modulating element a phase of the reference light divided in the light dividing step;
a light focusing step of focusing on a substantially same location of a hologram recording medium the signal light modulated in the light modulating step and the reference light whose phase has been modulated in the phase modulating step; and
a distance controlling step of controlling a distance between the phase modulating element and the hologram recording medium.

7. A hologram reproducing method comprising:
a phase modulating step of phase-modulating laser light as reference light by a phase modulating element, the laser light being emitted from a laser light source;
a light focusing step of focusing on a hologram recording medium the reference light whose phase has been modulated in the phase modulating step; and
a distance controlling step of controlling a distance between the phase modulating element and the hologram recording medium.

8. A hologram recording medium on which data is recorded by a hologram recording method, the hologram recording method comprising:
a light dividing step of dividing laser light emitted from a laser light source into signal light and reference light;
a light modulating step of modulating by a light modulating element the signal light divided in the light dividing step;
a phase modulating step of modulating by a phase modulating element a phase of the reference light divided in the light dividing step;
a light focusing step of focusing on a substantially same location of a hologram recording medium the signal light modulated in the light modulating step and the reference light whose phase has been modulated in the phase modulating step; and
a distance controlling step of controlling a distance between the phase modulating element and the hologram recording medium.
